# EUROPÄISCHE PATENTSCHRIFT

(11) **EP 3 303 857 B1**
(45) Veröffentlichungstag und Bekanntmachung des Hinweises auf die Patenterteilung: **11.12.2019**
(21) Anmeldenummer: 16730249.6
(22) Anmeldetag: 01.06.2016
(51) Int. Cl.: F16B 35/02, F16B 5/02, F16B 37/02

(54) **GEWINDESTIFT UND SYSTEM UMFASSEND EINEN GEWINDESTIFT UND EINE AUFNAHME**
THREADED PIN AND SYSTEM COMPRISING A THREADED PIN AND A RECEIVING MEANS
TIGE FILETÉE ET SYSTÈME COMPRENANT UNE TIGE FILETÉE ET UN LOGEMENT

(30) Priorität: 01.06.2015 DE 102015210094; 04.12.2015 DE 102015015595
(43) Veröffentlichungstag der Anmeldung: 11.04.2018
(73) Patentinhaber: A. Raymond et Cie, 38000 Grenoble (FR)
(72) Erfinder: SCHULZ, Stefan, 79540 Lörrach (DE); FRIEDL, Julien, 68640 Waldighoffen (FR); WARD, Ryan, Clarkston, MI 48348 (US)
(74) Vertreter: Tilmann, Max Wilhelm
(86) Internationale Anmeldenummer: PCT/EP2016/000892
(87) Internationale Veröffentlichungsnummer: WO 2016/192851

(56) Entgegenhaltungen:
- DE-T2- 69 129 337
- US-A- 2 560 211
- US-A- 2 560 961

## Beschreibung

Die Erfindung betrifft ein System umfassend einen Gewindestift und eine Aufnahme nach Anspruch 1.

Es ist bekannt, einen Gewindestift mittels eines Stanz-Biege-Prozesses aus einem Metallblech zu erzeugen, beispielsweise offenbaren US 2 560 961 A und US 3 068 540 A einen derartigen Gewindestift.

US 2 560 211 A betrifft eine selbsthaltende Struktur. DE 691 29 337 T2 bezieht sich auf ein Befestigungssystem, insbesondere auf ein Befestigungssystem mit einem mit Innengewinde versehenen Mutternteil und einem mit Außengewinde versehenen Schraubenteil. US 2 560 961 A betrifft eine Befestigungsvorrichtung.

Allerdings weisen die bekannten Gewindestifte den Nachteil auf, dass diese nicht in der Weise Verwendung finden, weil diese zu schwer, nicht stabil genug und/oder nicht schweißbar sind.

Aufgabe der vorliegenden Erfindung ist es, zumindest einen der genannten Nachteile der bekannten Gewindestifte zu überwinden.

Diese Aufgabe wird durch das System umfassend einen Gewindestift und eine Aufnahme des Anspruchs 1 gelöst. Vorteilhafte Ausführungsformen sind in den Unteransprüchen und der hier nachfolgenden Beschreibung wiedergegeben.

Die Erfindung geht von dem Grundgedanken aus, einen Gewindestift aus einem Ausgangsmaterial zu schaffen und derart zu verstärken, dass dieser besser verwendet werden kann. Erfindungsgemäß kann der Gewindestift dadurch verstärkt werden, dass der Gewindestift in einem Bereich der Basis des Gewindestifts, die insbesondere einem Spitzenabschnitt gegenüberliegend angeordnet sein kann, dadurch verstärkt werden kann, dass eine aus mehreren Basisteilen bestehende Basis stabilisiert wird, indem die Basisteile miteinander in Eingriff sind und/oder miteinander verbunden sind, alternativ oder zusätzlich kann vorgesehen sein, dass Seitenwände des Gewindestifts dadurch stabilisiert und verstärkt sind, dass die Seitenwände miteinander in Eingriff und/oder miteinander verbunden sind.

Die Erfindung schafft einen Gewindestift, der eine Basis, einen Spitzenabschnitt und zwei Seitenwände aufweist, wobei die Basis zwei Basisteile umfasst. Der Spitzenabschnitt ist von der Basis in der Richtung einer Längsachse des Gewindestifts beabstandet und umfasst einen Brückenabschnitt. Die Seitenwände weisen jeweils ein Außenprofil auf. Die erste Seitenwand erstreckt sich von dem Brückenabschnitt zu dem ersten Basisteil und die zweite Seitenwand erstreckt sich von dem Brückenabschnitt zu dem zweiten Basisteil. Die erste Seitenwand ist aus einem anderen Teil des Ausgangsmaterials geformt als die zweite Seitenwand und das erste Basisteil ist aus einem anderen Teil des Ausgangsmaterials als das zweite Basisteil geformt. Die beiden Seitenwände und die beiden Basisteile müssen damit nicht unmittelbar miteinander verbunden sein. Die Verbindung der beiden Seitenwände und der Basisteile erfolgt insbesondere mittelbar über andere Abschnitte des Gewindestifts.

Es kann ein Gewindestift geschaffen werden, der gegenüber einem Gewicht eines bekannten Gewindestiftes bzw. einer bekannten Schraube ein um ungefähr 50% bis 75% geringeres Gewicht aufweist. Insbesondere kann gegenüber einem aus Vollmaterial hergestellten Gewindestift eine Gewichtsersparnis von 50% erreichbar sein. Es kann ein Gewindestift geschaffen werden, dessen Gewicht im Bereich zwischen ungefähr 1,5 g und ungefähr 4 g, insbesondere zwischen ungefähr 2 g und ungefähr 3 g, liegt. Je nach Ausgestaltung der Basis oder der Länge des Abschnitts mit Gewinde kann das Gewicht des Gewindestiftes variieren.

Im Sinne der Erfindung umfasst der Begriff "Gewindestift" ein Befestigungselement, welches an einem zylindrischen Abschnitt, der insbesondere stiftförmig oder bolzenförmig sein kann, eine gewindeähnliche Struktur aufweist. Die gewindeähnliche Struktur kann eine zumindest abschnittsweise schiefe Ebene darstellen, die zumindest abschnittsweise wendelförmig auf dem zylindrischen Abschnitt gewickelt ist. Das als Gewindestift ausgestaltete Befestigungselement kann als schraubenähnliches Element oder als ein eingesetztes Einsatzelement in ein Bauteil eingebracht werden bzw. mit diesem verbunden werden. Mittels einer sich an dem zylindrischen Abschnitt unmittelbar oder mittelbar anschließenden Basis kann eine weitere Verbindung mit einem anderen Bauteil erreicht werden, indem die Basis beispielsweise mit dem anderen Bauteil, insbesondere mittels einer stoffschlüssigen Verbindung, bevorzugt verschweißt oder verklebt, verbunden ist.

In einer ersten Variante ist ein Teil des ersten Basisteils in Eingriff mit einem Teil des zweiten Basisteils und stabilisiert so den Gewindestift. Alternativ oder zusätzlich kann in einer weiteren Variante ein Teil des ersten Basisteils mit einem Teil des zweiten Basisteils verbunden sein.

Alternativ oder zusätzlich zu den zuvor genannten Varianten kann eine Stabilisierung des Gewindestifts in einer weiteren Variante dadurch erreicht werden, dass ein Teil der ersten Seitenwand in Eingriff mit einem Teil der zweiten Seitenwand ist. Alternativ oder zusätzlich zu den zuvor genannten Varianten kann ein Teil der ersten Seitenwand mit einem Teil der zweiten Seitenwand verbunden sein.

Der Begriff "in Eingriff" im Sinne der Erfindung umfasst eine Ausgestaltung, bei der die genannten Elemente miteinander in Anlage sind, wobei eines der beiden Elemente das andere übergreift oder hintergreift, so dass eine abschnittsweise Materialdopplung vorliegt, mit der insbesondere eine Stabilisierung in Richtung der Normalen der Auflage der beiden Elemente vorliegt. Es kann auch vorgesehen sein, dass mittels des Hintergreifens durch eines der beiden Elemente eine stufenartige Struktur bzw. ein Vorsprung durch das hintergreifende Element gebildet wird und die beiden Elemente auch an der Stufe bzw. dem Vorsprung in Eingriff sind, so dass alternativ oder zusätzlich zur Auflage der beiden Elemente ein Eingriff der beiden Elemente im Wesentlichen senkrecht zu einer möglichen Auflage der beiden Elemente erfolgt.

Bei dem Begriff "verbinden" in Bezug auf den ersten Basisteil und den zweiten Basisteil bzw. die erste Seitenwand und die zweite Seitenwand wird ein Kleben und/oder Schweißen des Ausgangsmaterials in einem Abschnitt der genannten Elemente im Sinne der Erfindung verstanden, welches zu einer Stabilisierung des Gewindestifts führen kann. Der Begriff "verbinden" umfasst eine stoffschlüssige Verbindung der beiden Elemente, die insbesondere die Verwendung eines Klebstoffs oder den Einsatz einer Schweißvorrichtung erfordern kann. Bei dem Schweißen kann es sich insbesondere um ein Laserschweißen oder ein Widerstandsschweißen handeln.

Der Begriff "Stabilisierung" umfasst im Sinne der Erfindung die allgemeine Formerhaltung des Gewindestiftes. Die relative Lage der Abschnitte des Gewindestifts kann im Wesentlichen beibehalten werden. Den am Gewindestift angreifenden Kräften kann entgegengewirkt werden.

Der Begriff "Außenprofil" im Sinne der Erfindung umfasst eine an dem Gewindestift an den äußeren Seitenwänden geformte gewindeähnliche Struktur, die insbesondere mittels eines Stanz-Biege-Prozesses erzeugbar sein kann. Die gewindeähnliche Struktur am Gewindestift kann insbesondere ein metrisches Gewinde zumindest abschnittsweise nachbilden. Als Gewindegrößen des Gewindestiftes können im Wesentlichen die Größen M5, M6 und größer einstellbar sein.

Ein mögliches Anwendungsgebiet für die Verwendung eines erfindungsgemäßen Gewindestiftes kann die Befestigung einer Unterbodenverkleidung, eines Kotflügels oder einer Innenraumverkleidung im Automobilbereich sein.

Die Abmessungen des Gewindestiftes können derart sein, dass die Länge des Gewindestiftes in der Erstreckung der Längsachse im Wesentlichen im Bereich von ungefähr 5 mm bis ungefähr 55 mm, bevorzugt von ungefähr 8 mm bis ungefähr 50 mm, insbesondere bevorzugt von ungefähr 10 mm bis ungefähr 30 mm, ganz besonders bevorzugt von ungefähr 15 mm bis ungefähr 25 mm, liegt. In einer bevorzugten Ausführungsform beträgt die Länge des Gewindestiftes im Wesentlichen ungefähr 20 mm.

Die Abmessungen des Gewindestiftes können derart sein, dass der Durchmesser der Basis oder eine Seitenlänge der Basis im Falle einer polygonförmigen, insbesondere rechteckförmigen, Basis im Wesentlichen im Bereich von ungefähr 8 mm bis ungefähr 100 mm, bevorzugt von ungefähr 10 mm bis ungefähr 60 mm, insbesondere bevorzugt von ungefähr 10 mm bis ungefähr 40 mm, ganz besonders bevorzugt von ungefähr 10 mm bis ungefähr 20 mm, liegt. In einer bevorzugten Ausführungsform beträgt der Durchmesser der Basis oder eine Seitenlänge der Basis im Falle einer polygonförmigen, insbesondere rechteckförmigen, Basis im Wesentlichen ungefähr 11,5 mm. Die Basis kann eine im Wesentlichen runde oder eckige Form quer zur Längserstreckung des Gewindestifts aufweisen. In einer Ausführungsform kann die Basis eine im Wesentlichen kreisförmige oder ellipsenförmige Ausgestaltung quer zur Längserstreckung des Gewindestifts aufweisen. Die Form der Basis kann sich insbesondere aus einer Einhüllenden der Kontur der Basis ergeben. Beispielsweise kann der Umfang bzw. die Kontur der Basis eine oder mehrere Unterbrechungen, insbesondere in Form von Lücken, insbesondere zwischen den Basisteilen, aufweisen. Die Form der Basis quer zur Längserstreckung des Gewindestifts kann an eine im Nachfolgenden beschriebene Aufnahme angepasst sein.

Die Dicke des Ausgangsmaterials, aus dem der Gewindestift geformt sein kann, kann im Wesentlichen aus dem Intervall zwischen ungefähr 0,4 mm bis ungefähr 2 mm, insbesondere zwischen ungefähr 0,5 mm bis ungefähr 1,5 mm, insbesondere bevorzugt ungefähr 0,6 mm bis ungefähr 1,0 mm, ganz besonders bevorzugt von ungefähr 0,7 mm bis ungefähr 0,9 mm gewählt sein. In einer bevorzugten Ausführungsform beträgt die Dicke des Ausgangsmaterials, aus dem der Gewindestift geformt sein kann, im Wesentlichen ungefähr 0,8 mm.

Das Ausgangsmaterial kann einen Stahl, Aluminium und/oder einen Faserverbundwerkstoff mit einer nicht-metallischen oder einer metallischen Matrix aufweisen. In einer bevorzugten Ausführungsform ist das Ausgangsmaterial ein Stahl, Aluminium oder ein metallischer oder nicht-metallischer Faserverbundwerkstoff.

Als bevorzugtes Ausgangsmaterial kann für den Gewindestift ein plattenförmiges Material, insbesondere ein Metallblech, verwendet werden und der Gewindestift kann in einer weiterhin bevorzugten Ausführungsform aus einem Stanz-Biege-Prozess aus dem plattenförmigen Material erzeugt werden.

Sofern der Begriff "ein" und entsprechend grammatikalische Anpassungen an das Genus des dem Begriff nachfolgenden bezeichneten Elements in der Beschreibung und den Ansprüchen verwendet wird, so umfasst dieser Begriff die Einzahl und die Mehrzahl des jeweils bezeichneten Elements. Der Begriff "ein" und entsprechende grammatikalische Anpassungen an das dem Begriff nachfolgenden bezeichneten Element schließt in der Regel das Vorsehen mehrerer der Elemente nicht aus.

In einer bevorzugten Ausführungsform ist der Teil der ersten Seitenwand, der in Eingriff mit einem Teil der zweiten Seitenwand ist, und/oder der Teil der ersten Seitenwand, der mit einem Teil der zweiten Seitenwand verbunden ist, näher an dem Spitzenabschnitt als an dem Basisabschnitt angeordnet, so dass die Stabilisierung eher den Teil im Bereich der Spitze des Gewindestifts betrifft. Die Stabilisierung der Seitenwand, die durch ein Ineingriffbringen der beiden Seitenwände und/oder ein Verbinden der beiden Seitenwände erreicht werden kann, ist somit eher in dem Spitzenabschnitt zugeordneten Endbereich des Gewindestifts vorgesehen, um beispielsweise gerade diesen Bereich zu stabilisieren, der empfindlicher hinsichtlich des Einwirkens von Kräften sein kann.

In einer bevorzugten Ausführungsform ist der Eingriff der beiden Seitenwände derart, dass die erste Seitenwand einen Vorsprung aufweist, der sich in einer Richtung in einem Winkel zur Längsachse des Gewindestifts erstreckt und mit einem Teil der zweiten Seitenwand durch Reibschluss oder Formschluss in Eingriff ist. Hierdurch kann erreicht werden, dass die beiden Seitenwände aufeinander aufliegen und die zweite Seitenwand mit einer Kante oder einem Ende auf den an der ersten Seitenwand ausgebildeten Vorsprung stößt und einen Formschluss und/oder Reibschluss ausbildet. Die beiden Seitenwände können sich somit in mehreren Richtungen stabilisieren. Während eine Auflage der beiden Seitenwände aufeinander im Wesentlichen zu einer Stabilisierung bzw. Verstärkung in einer ersten Richtung quer zur Längsachse des Gewindestifts erfolgen kann, kann die Ausbildung eines Vorsprungs, der sich im Wesentlichen parallel zur Längsachse des Gewindestifts erstrecken kann, eine Stabilisierung bzw. Verstärkung in einer zweiten Richtung quer zur Längsachse des Gewindestifts bewirken, wobei die erste Richtung quer zur zweiten Richtung verlaufen kann.

In einer bevorzugten Ausführungsform weist das erste Basisteil einen Vorsprung auf, der sich in einer Richtung in einem Winkel zur Längsachse des Gewindestifts erstreckt und in reibschlüssigem oder formschlüssigem Eingriff mit einem Teil der Seitenwand des Basisteils ist. Hierdurch kann erreicht werden, dass das Basisteil zur Unterstützung der Stabilisierung bzw. Verstärkung der Seitenwand verwendet werden kann.

In einer bevorzugten Ausführungsform sind der erste Basisteil und die Seitenwand aus Abschnitten des Ausgangsmaterials, insbesondere eines Metallblechs, geformt, wobei der erste Basisteil mit der ersten Seitenwand durch einen gebogenen Abschnitt des Ausgangsmaterials, insbesondere des Metallblechs, verbunden ist. Hier ist die Ausbildung aus einem Stück des Ausgangsmaterials, insbesondere des Metallblechs möglich. Der Begriff "verbunden" in diesem Zusammenhang umfasst den Begriff "integral" ausgebildet oder "einstückig" ausgebildet, welches die Herstellung, insbesondere in Bezug auf die Anzahl der Herstellungsschritte, vereinfacht. In einer Alternative oder zusätzlich kann vorgesehen sein, dass der zweite Basisteil und die zweite Seitenwand aus Abschnitten des Ausgangsmaterials, insbesondere des Metallblechs, geformt sind und der zweite Basisteil mit der zweiten Seitenwand durch einen gebogenen Abschnitt des Ausgangsmaterials, insbesondere des Metallblechs, verbunden ist. Weiterhin alternativ oder zusätzlich kann der Brückenabschnitt und die erste Seitenwand aus Abschnitten des Ausgangsmaterials, insbesondere des Metallblechs, geformt sein und alternativ oder zusätzlich kann der Brückenabschnitt und die zweite Seitenwand aus Abschnitten des Ausgangsmaterials, insbesondere des Metallblechs, geformt sein. Hierdurch kann ein einfach aufgebauter und einfach herstellbarer Gewindestift erzeugt werden, der insbesondere komplett aus einem zusammenhängenden Ausgangsmaterial, insbesondere einem Metallblech, hergestellt werden kann.

Der Brückenabschnitt kann eine Stabilisierung der Seitenwände, insbesondere im Spitzenabschnitt, bewirken. In einer besonders bevorzugten Ausführungsform kann der Brückenabschnitt in einer Richtung quer zur Längsachse des Gewindestifts glockenförmig, ganz besonders bevorzugt gaußglockenförmig, ausgebildet sein. Es wird eine stabilisierende Wirkung der Seitenwände in Richtung der Verbindung, die durch den Brückenabschnitt gebildet ist, erreicht. Der Brückenabschnitt kann aufgrund seiner Form die beiden Seitenwände im Wesentlichen in dem vorgegebenen Abstand zueinander auch bei Einwirken von äußeren Kräften verstärken.

In einer bevorzugten Ausführungsform weist die erste Seitenwand zumindest über einen Teil ihrer Erstreckung entlang der Längsachse einen U-förmigen, C-förmigen oder L-förmigen Querschnitt oder einen Querschnitt der Form eines Teils eines Rings in einer Ebene, die senkrecht zur Längsachse ist, auf. Mit der genannten Form, die eine Biegung oder eine Abwinklung beinhalten kann, ist eine Stabilisierung der Seitenwand möglich. Alternativ und/oder zusätzlich kann die zweite Seitenwand zumindest über einen Teil ihrer Erstreckung entlang der Längsachse einen U-förmigen, C-förmigen oder L-förmigen Querschnitt oder einen Querschnitt der Form eines Teils eines Rings in einer Ebene, die senkrecht zur Längsachse ist, aufweisen. Die für einen Teil der zweiten Seitenwand genannten Formen können zu einer Stabilisierung der zweiten Seitenwand beitragen. Die genannten Formen für Teile der ersten und zweiten Seitenwand tragen insbesondere einer Stabilisierung gegen auf den Gewindestift auftretende Radialkräfte Rechnung.

Der Begriff "Ring" bei der Beschreibung der Seitenwand in einer Ebene quer zur Längsachse des Gewindestifts umfasst geschlossene bandförmige Formen, insbesondere als Ellipse ausgestaltete Formen oder polygonförmige Ausgestaltungen. Die Seitenwand kann dabei einen Teil des Bands ausbilden oder sein. Der Begriff "Teil eines Rings" umfasst einen Abschnitt der Seitenwand, insbesondere einen Ring-, Ellipsen- oder Polygon-Abschnitt. Insbesondere kann sich eine Form der Seitenwand ergeben, bei der ein im Wesentlichen gerader Abschnitt mit einem ellipsenförmigen Abschnitt direkt oder indirekt verbunden ist. Eine Seitenwand des Gewindestifts kann in einer Ebene quer zur Längserstreckung des Gewindestifts mindestens zwei, bevorzugt mehr als zwei, insbesondere bevorzugt drei, im Wesentlichen gerade Abschnitte aufweisen, von denen zwei mittels eines Ring-, Ellipsen- oder Polygonabschnitts, insbesondere direkt, miteinander verbunden sind.

In einer bevorzugten Ausführungsform weist der erste Basisteil eine im Wesentlichen flache Oberfläche, die von dem Spitzenabschnitt abgewandt ist, auf. Hierdurch kann zumindest der erste Basisteil mit einem Abschnitt auf einem Trägerteil aufgeschweißt werden. Alternativ oder zusätzlich kann der zweite Basisteil eine im Wesentlichen flache Oberfläche aufweisen, die von dem Spitzenabschnitt abgewandt ist, wodurch der zweite Basisteil an einem Trägerteil verschweißbar ist. Durch eine flache Ausgestaltung kann dabei eine stabile Ausführung erreicht werden.

Das erfindungsgemäße System weist eine Aufnahme auf, in der die Basis des Gewindestifts verschieblich gelagert ist. Hierdurch kann erreicht werden, dass ein montierter bzw. eingebauter Gewindestift in einem gewissen Bereich verschieblich ist. Der Gewindestift kann beispielsweise dadurch eingebaut werden, dass die Aufnahme an einem Trägerteil befestigt, insbesondere aufgeschweißt, wurde. Die Verschieblichkeit kann Toleranzen bei der weiteren Montage von weiteren Elementen an dem Gewindestift ausgleichen.

Der Begriff "Aufnahme" umfasst im Sinne der Erfindung eine Lagerung für die Basis des Gewindestifts, aus der der Gewindestift nicht in Richtung des Spitzenabschnitts entnommen werden kann. Die Bewegung des Gewindestifts relativ zu der Aufnahme in Richtung der Längsachse des Gewindestifts kann sich im Wesentlichen auf 0 reduzieren, sodass der Gewindestift in der Richtung seiner Längsachse weitestgehend unbeweglich ist. Der Gewindestift kann in die Aufnahme eingesteckt werden, wobei die Aufnahme eine Öffnung zum Durchtritt des Spitzenabschnitts des Gewindestifts aufweist. Mittlerer Bereich des Gewindestifts und Spitzenabschnitt des Gewindestifts sind im Wesentlichen bei einer Halterung des Gewindestifts in der Aufnahme exponiert und damit nicht von der Aufnahme überdeckt. Die Basis des Gewindestifts kann größer sein, als die Durchtrittsöffnung für den Spitzenabschnitt.

Die Erfindung schafft auch ein System umfassend einen vorgenannten Gewindestift und eine Aufnahme, in der der Gewindestift quer zu seiner Längsachse verschieblich gehalten werden kann. Hierdurch kann eine Aufnahme zusammen mit einem Gewindestift dazu verwendet werden, dass ein mittels der Aufnahme montierter bzw. befestigter Gewindestift verschieblich quer zu seiner Längsachse gehalten werden kann, um beispielsweise Toleranzen bei der Montage auszugleichen. Die Relativposition des Gewindestifts zur Aufnahme kann verändert werden und ein "Spiel" (ein fertigungs- und/oder anwendungsbedingter Bewegungsfreiraum) für ein Element, das auf den Gewindestift aufgesteckt werden kann, insbesondere eine Mutter, ist vorhanden.

In einer bevorzugten Ausführungsform kann der Gewindestift in der Aufnahme in jeder Richtung quer zu seiner Längsachse verschieblich gehalten werden. Hierdurch ist ein großer Bewegungsfreiraum möglich und bei einer Montage der Aufnahme muss nicht auf eine bestimmte Vorzugsrichtung geachtet werden.

In einer bevorzugten Ausführungsform weist die Aufnahme einen die Basis des Gewindestifts übergreifenden Arm auf. Der Arm kann eine Basis für eine Montage aufweisen, die beispielsweise mit einem Trägerteil verschweißt werden kann. Der die Basis übergreifende Arm erstreckt sich damit seitlich von der Basis in einen Bereich über die Basis, um den Gewindestift zu halten.

In einer bevorzugten Ausführungsform weist die Aufnahme eine Vertiefung auf, die an die Dicke der Basis des Gewindestifts angepasst ist. Die Vertiefung kann damit eine Höhe aufweisen, die im Wesentlichen der Dicke der Basis des Gewindestifts entspricht, sodass der Gewindestift im Wesentlichen unbeweglich in Richtung seiner Längsachse gehalten wird. Die Grundfläche der Vertiefung ist größer als die Basis, sodass die Basis des Gewindestifts in der Vertiefung bewegt werden kann. Die Aufnahme kann im Wesentlichen tellerförmig ausgestaltet sein, so dass die Aufnahme ein flaches Teil mit insbesondere rundem Außenquerschnitt aufweisen kann, in dem die Vertiefung und die Durchtrittsöffnung ausgestaltet sein können. Randseitig zur Vertiefung kann eine zumindest abschnittsweise geschlossene Auflagefläche zur Auflage auf ein Trägerteil angeordnet sein. Die Auflagefläche kann mit dem Trägerteil verschweißt werden.

In einer bevorzugten Ausführungsform weist die Vertiefung eine seitliche Anlagefläche für eine Seitenfläche der Basis des Gewindestifts auf. Mittels der seitlichen Anlagefläche kann eine Stoßfläche für eine Seitenfläche der Basis ausgebildet werden, sodass eine Rotation des Gewindestifts um seine Längsachse verhindert werden kann, wenn die seitliche Anlagefläche in Anlage mit der Seitenfläche der Basis des Gewindestifts ist.

Die Aufnahme kann einstückig ausgebildet sein, wobei die Aufnahme im Wesentlichen tellerförmig sein und eine Vertiefung für die verschiebliche Lagerung der Basis des Gewindestifts und eine Durchtrittsöffnung für den Spitzenabschnitt aufweisen kann. Es kann auch vorgesehen sein, dass die Aufnahme an dem der Durchtrittsöffnung beabstandeten Ende geschlossen ausgebildet ist. Die Aufnahme kann aus zwei miteinander verbundenen Teilen bestehen. Beispielsweise ist es möglich, dass ein Teil der tellerförmige mit einer Vertiefung und einer Durchtrittsöffnung versehene Teil ist und die Aufnahme - mit in der Aufnahme eingesetztem Gewindestift - mittels eines zweiten Teils verschlossen ist. Die beiden Teile können randseitig miteinander verbunden sein. Das zweite Teil kann ein plattenförmiges Teil sein, das eine geringere Erstreckung in der Höhe als in der Fläche aufweist. Die Befestigung des Gewindestifts mit der Aufnahme an einem Trägerteil kann dadurch erfolgen, dass das zweite Teil mit dem Trägerteil verbunden ist, insbesondere verschweißt ist.

Der Begriff "abgewandt" im Sinne der Erfindung umfasst, dass es keine Gerade gibt, die auf der flachen Oberfläche beginnt und einen Punkt des Spitzenabschnitts schneidet.

Nachfolgend wird die Erfindung anhand von Ausführungsformen der Erfindung näher darstellenden Zeichnungen erläutert. Darin zeigen:
Die Erfindung wird nachfolgend anhand von Zeichnungen, die Ausführungsformen der Erfindung zeigen, näher erläutert. Darin zeigt
- Fig. 1:: eine Seitenansicht eines Gewindestifts für ein System
- gemäß: einer ersten Ausführungsform;
- Fig. 2:: eine weitere Seitenansicht des Gewindestifts gemäß Fig. 1, bei der der Gewindestift um 90° um seine Längsachse gedreht wurde;
- Fig. 3:: eine isometrische Darstellung des Gewindestifts gemäß Fig. 1 in einer Ansicht schräg von oben;
- Fig. 4:: eine isometrische Darstellung des Gewindestifts gemäß Fig. 1 in einer Ansicht schräg von unten;
- Fig. 5:: eine Ansicht des Gewindestifts gemäß Fig. 1 von oben;
- Fig. 6:: eine Seitenansicht eines Gewindestifts für ein System gemäß einer zweiten Ausführungsform;
- Fig. 7:: eine weitere Seitenansicht des Gewindestifts gemäß Fig. 6, bei der der Gewindestift um 90° um seine Längsachse gedreht wurde;
- Fig. 8:: eine isometrische Darstellung des Gewindestifts gemäß Fig. 6 in einer Ansicht schräg von oben;
- Fig. 9:: eine isometrische Darstellung des Gewindestifts gemäß Fig. 6 in einer Ansicht schräg von unten;
- Fig. 10:: eine Ansicht des Gewindestifts gemäß Fig. 6 von oben;
- Fig. 11:: eine Seitenansicht eines Gewindestifts für ein System
- gemäß: einer dritten Ausführungsform;
- Fig. 12:: eine weitere Seitenansicht des Gewindestifts gemäß Fig. 11, bei der der Gewindestift um 90° um seine Längsachse gedreht wurde;
- Fig. 13:: eine isometrische Darstellung des Gewindestifts gemäß Fig. 11 in einer Ansicht schräg von oben;
- Fig. 14:: die isometrische Darstellung des Gewindestifts gemäß Fig. 13 nachdem der Gewindestift im Basisbereich verschweißt wurde;
- Fig. 15:: eine Ansicht des Gewindestifts gemäß Fig. 11 von oben;
- Fig. 16:: eine schematische isometrische, teilweise transparente Darstellung eines Gewindestifts mit einer Aufnahme;
- Fig. 17:: eine Ansicht von oben auf den Gewindestift mit der Aufnahme gemäß Fig. 16 in teiltransparenter Darstellung;
- Fig. 18:: eine Schnittdarstellung gemäß Fig. 16 von der Seite; und
- Fig. 19:: eine teiltransparente isometrische Darstellung eines weiteren Ausführungsbeispiels eines Gewindestifts mit einer Aufnahme.

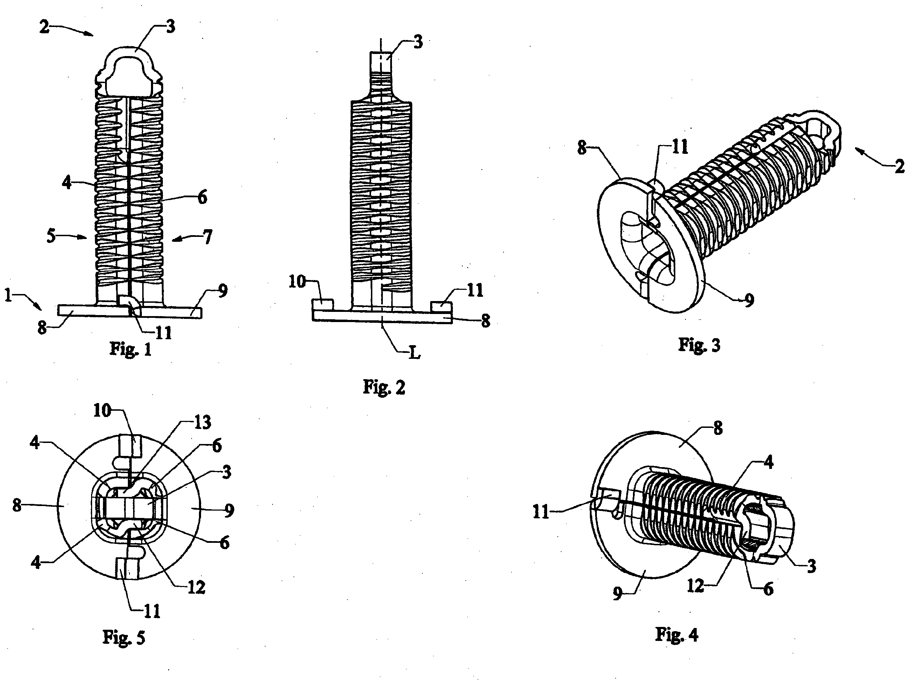

Die Figuren 1 bis 5 zeigen einen Gewindestift, der aus einem Ausgangsmaterial, insbesondere einem Metallblech, hergestellt ist. Der Gewindestift weist eine Längsachse L, eine Basis 1 und einen Spitzenabschnitt 2 auf. Der Spitzenabschnitt 2 ist von der Basis 1 in Richtung der Längsachse L beabstandet. Im Spitzenabschnitt 2 liegt ein Brückenabschnitt 3 vor.

Im mittleren Bereich des Gewindestifts weist der Gewindestift eine erste Seitenwand 4 mit einem Außenprofil 5 und eine zweite Seitenwand 6 mit einem Außenprofil 7 auf. Die beiden Seitenwände 4, 6 formen mit den Außenprofilen 5, 7 im mittleren Bereich des Gewindestifts eine im Wesentlichen in Umfangsrichtung geschlossene strukturierte Oberfläche. Die Außenprofile 5, 7 bilden ein schraubenartiges Gewinde nach. Der Querschnitt der Seitenwände 4, 6 ist abgerundet in Form eines abgerundeten Vierecks (vgl. Fig. 5).

Die Seitenwände 4, 6 erstrecken sich von dem Brückenabschnitt 3, der die beiden Seitenwände 4, 6 stegartig verbindet, zur Basis 1. Die Basis 1 ist im Wesentlichen kreisförmig ausgestaltet. Die Seitenwand 4 erstreckt sich von dem Brückenabschnitt 3 bis zu einem ersten Basisteil 8 der Basis 1; und die zweite Seitenwand 6 erstreckt sich von dem Brückenabschnitt 3 bis zu einem zweiten Basisteil 9 der Basis 1 erstreckt.

Die erste Seitenwand 4 ist aus einem anderen Teil des Metallblechs geformt als die zweite Seitenwand 6 und das erste Basisteil 8 ist aus einem anderen Teil des Metallblechs als das zweite Basisteil 9 geformt, so dass bei dem ursprünglichen Metallblech vor dem Umformen zum Gewindestift die Seitenwände 4, 6 und die Basisteile 8, 9 lediglich über den Brückenabschnitt 3 miteinander verbunden sind. In der ursprünglichen Form des Metallblechs vor dem Umformen zum Gewindestift liegt eine Symmetrie der Seitenwände 4, 6 und der Basisteile 8, 9 zum Brückenabschnitt 3 vor.

Bei dem Gewindestift in den Figuren 1 bis 5 ist ein Teil des ersten Basisteils 8 in Eingriff mit einem Teil des zweiten Basisteils 9. Der Eingriff erfolgt über einen am ersten Basisteil 8 geformten stufenartigen Vorsprung 10 und über einen am zweiten Basisteil 9 geformten stufenartigen Vorsprung 11. Der Vorsprünge 10 überlappt den zweiten Basisteil 9 und der Vorsprung 11 überlappt den Basisteil 9. Ferner stoßen die Basisteile 8, 9 in einer Richtung quer zur Längsachse L aneinander. Durch jeden der Vorsprünge 10, 11 ist ein Form- und/oder Reibschluss ausbildbar.

Ferner ist im oberen mittleren Bereich des Gewindestifts, also einem Bereich der näher am Brückenabschnitt 3 liegt als an der Basis 1, ein Teil der ersten Seitenwand 4 in Eingriff mit einem Teil der zweiten Seitenwand 6. Der Eingriff erfolgt über einen an einem Teil der ersten Seitenwand 4 geformten stufenartigen Vorsprung 12 und über einen an einem Teil der zweiten Seitenwand 6 geformten stufenartigen Vorsprung 13. Der Vorsprung 12 hintergreift einen Teil der zweiten Seitenwand 6 und der Vorsprung 13 hintergreift einen Teil der ersten Seitenwand 4.

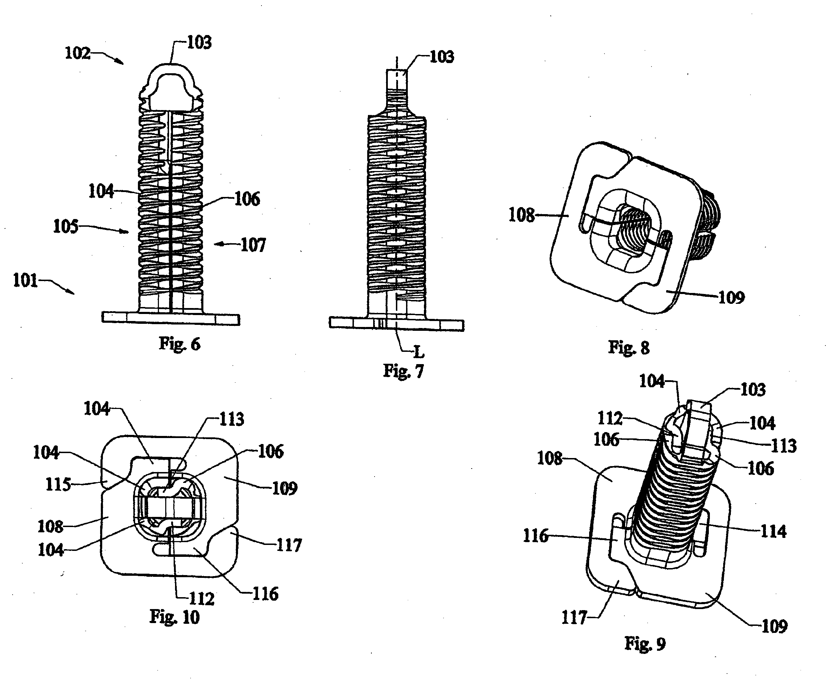

Die Figuren 6 bis 10 zeigen eine weitere Ausführungsform eines Gewindestiftes. Bei der weiteren Ausführungsform werden Elemente, die in ihrer Funktion Elementen aus der in den Figuren 1 bis 5 dargestellten Ausführungsform gleichen, mit gleichen Bezugszeichen, die um den Wert 100 erhöht sind, gekennzeichnet. Im Folgenden wird die zweite Ausführungsform im Wesentlichen bezüglich ihrer Unterschiede zur ersten Ausführungsform beschrieben.

Bei dem Gewindestift in den Figuren 6 bis 10 weist die Basis quer zur Längsachse L des Gewindestifts einen viereckigförmigen Querschnitt mit abgerundeten Ecken auf. Ein Teil des ersten Basisteils 108 ist in Eingriff mit einem Teil des zweiten Basisteils 109 mittels einer Verriegelung der beiden Teile in einer Ebene quer zur Längsachse L. Ein Formschluss für einen Abschnitt 114 des ersten Basisteils 108 wird durch einen (Verriegelungs-)Abschnitt 115 des zweiten Basisteils 109 erreicht; und ein Formschluss für einen Abschnitt 116 des zweiten Basisteils 109 wird durch einen (Verriegelungs-)Abschnitt 117 des ersten Basisteils 108 erreicht.

Auch wenn die in den Figuren 6 bis 10 gezeigte Ausführungsform einen viereckförmigen Querschnitt der Basis 101 zeigt, so sind auch andere Formen möglich, wie beispielsweise ein runder, kreisförmiger, ellipsenförmiger oder allgemein polygonförmiger Querschnitt.

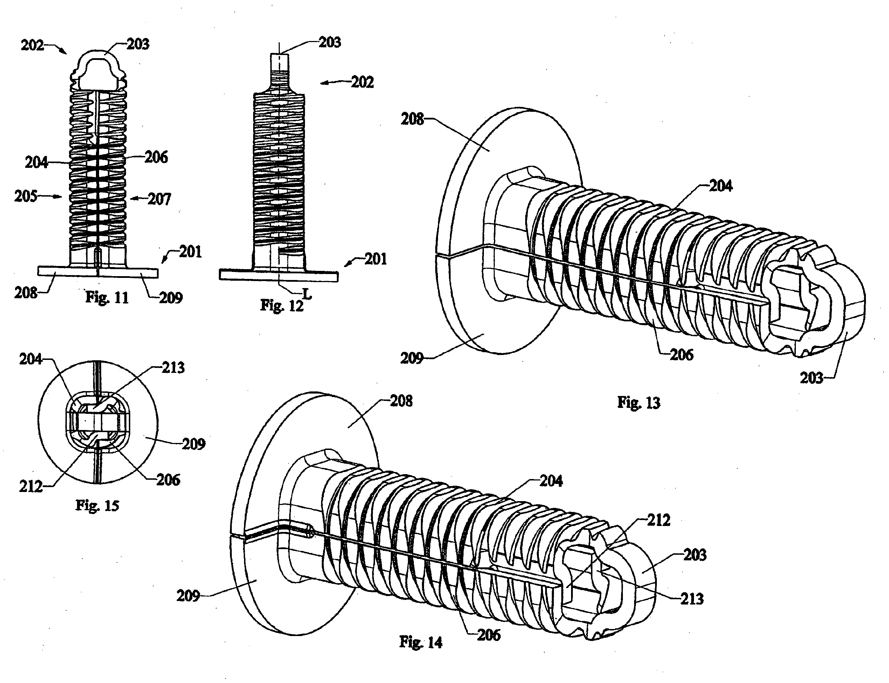

Die Figuren 11 bis 15 zeigen eine weitere Ausführungsform eines Gewindestiftes. Bei der weiteren Ausführungsform werden Elemente, die in ihrer Funktion Elementen aus der in den Figuren 1 bis 5 dargestellten Ausführungsform gleichen, mit gleichen Bezugszeichen, die um den Wert 200 erhöht sind, gekennzeichnet. Im Folgenden wird die dritte Ausführungsform im Wesentlichen bezüglich ihrer Unterschiede zur ersten Ausführungsform beschrieben.

Bei dem Gewindestift in den Figuren 11 bis 15 ist ein Teil des ersten Basisteils 208 mit einem Teil des zweiten Basisteils 209 verbunden. Die Verbindung lässt sich aus einem Vergleich der Figuren 13 und 14 ersehen. Die Figur 13 zeigt den Gewindestift vor dem Verschweißen und die Figur 14 zeigt den Gewindestift nach dem Verschweißen der Teile des ersten und zweiten Basisteils 208, 209.

Die in den Figuren dargestellten beiden Ausführungsformen sind hinsichtlich des Ineingriffbringens und Verbindens, insbesondere in Form eines Verschweißens, von Teilen der Seitenwände und/oder Teilen der Basisteile austauschbar und/oder kombinierbar. Es sind ausdrücklich alle Kombinationen eines Ineingriffbringens und/oder Verbindens umfasst.

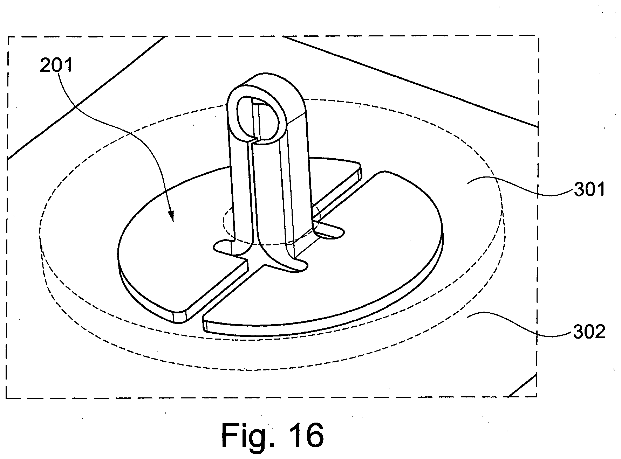

Fig. 16 zeigt in einer schematischen isometrischen, teilweise transparenten Darstellung einen Gewindestift, der mit seiner Basis verschieblich in einer Aufnahme 301 gelagert ist. Die Aufnahme 301 ist mit einem Trägerteil 302 randseitig verschweißt. Beispielhaft wird die Basis des in der Fig. 16 dargestellten Ausführungsbeispiels des Gewindestifts mit dem Bezugszeichen 201 bezeichnet. Andere Kombinationen der Aufnahme 301 mit den in den Fig. 1 bis 9 dargestellten Ausführungsformen des Gewindestifts und entsprechender Basis 1, 101 sind auch möglich. Der Gewindestift ist in der Aufnahme 301 quer zu seiner Längsachse verschieblich gehalten. Der Gewindestift entspricht im Wesentlichen dem in den Fig. 11 bis 15 dargestellten Ausführungsbeispiel. Der Gewindestift kann in der Aufnahme 301 rotieren und in jeder Richtung quer zu seiner Längsachse verschoben werden.

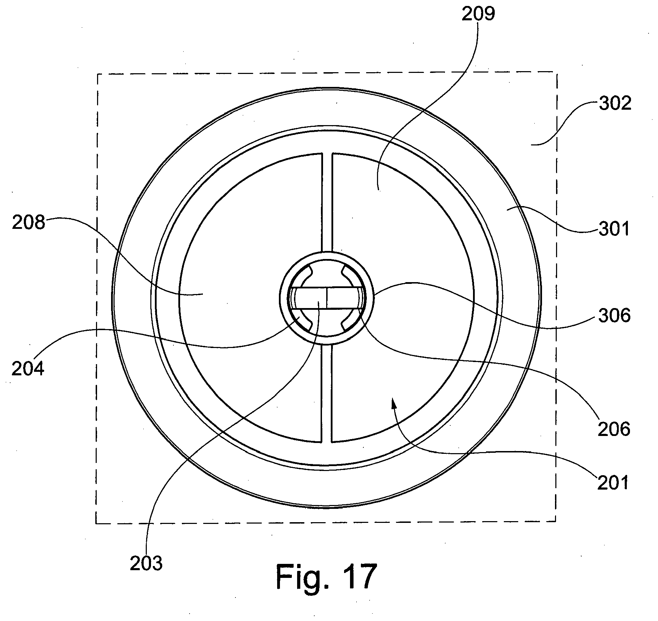

Der Fig. 17, die die Halterung des Gewindestifts in der Aufnahme 301 gemäß Fig. 16 in einer Ansicht von oben in teilweise transparenter Darstellung zeigt, ist zu entnehmen, dass die Aufnahme 301 eine Durchtrittsöffnung 306 für den Spitzenabschnitt 203 und den mittleren Abschnitt mit den Seitenwänden 204, 206 aufweist. Die Durchtrittsöffnung 306 in der Aufnahme 301 ist größer als der Querschnitt des mittleren Abschnitts des Gewindestifts. Der Gewindestift kann in der Aufnahme 301 bis zu einem Anschlag des mittleren Abschnitts des Gewindestifts an den Rand der Durchtrittsöffnung 306 und/oder eines Anschlags der Seitenwand 305 der Basis 201 des Gewindestifts an einer seitlichen Anlagefläche 304 der Aufnahme 301 verschoben werden.

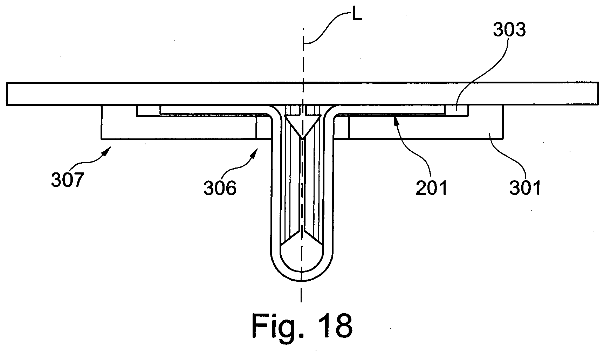

Der Fig. 18, die eine Schnittdarstellung der Fig. 16 von der Seite zeigt, ist zu entnehmen, dass die Aufnahme 301 eine Vertiefung 303 aufweist, wobei die Höhe der Vertiefung 303 im Wesentlichen der Erstreckung der Basis 201 in Richtung quer zur Längsachse L des Gewindestifts entspricht. Die Grundfläche der Basis 201 des Gewindestifts ist geringer als die Größe der Grundfläche der Vertiefung 303, d.h. in einer Erstreckung quer zur Längsachse des Gewindestifts.

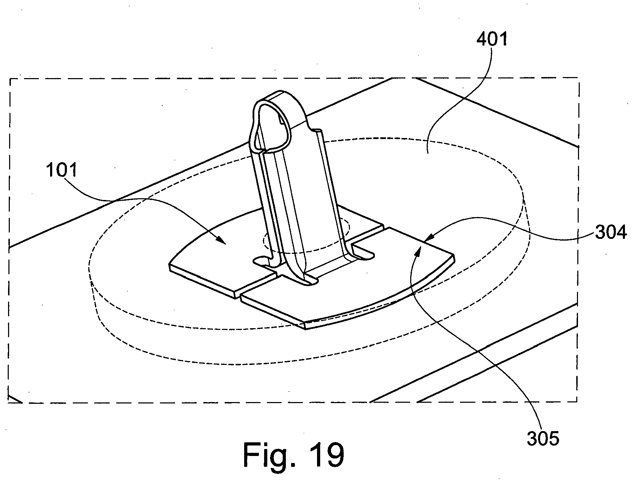

In der Fig. 19 ist eine teiltransparente isometrische Darstellung eines weiteren Ausführungs-beispiels eines Gewindestifts in einer Aufnahme 401 gezeigt, wobei als Gewindestift im Wesentlichen das in den Fig. 6 bis 10 dargestellte Ausführungsbeispiel verwendet wurde, bei dem die Basis 101 des Gewindestifts nicht rotationssymmetrisch, sondern mit eckförmiger Grundfläche ausgestaltet ist. In der Aufnahme 401 kann eine seitliche Anlagefläche 304 für eine Seitenfläche 305 der Basis 101 vorgesehen sein, die eine Rotation des Gewindestifts um seine Längsachse L in der Aufnahme 401 verhindert. Der Gewindestift kann verschieblich entlang der seitlichen Anlagefläche 304 und quer zur seitlichen Anlagefläche 304 gehalten sein, wobei eine Rotation um mehr als 90° ausgeschlossen ist, da die seitliche Anlagefläche 304 eine Drehung des Gewindestifts in der Aufnahme 401 verhindert.

Insbesondere die Tiefe der in der Aufnahme 401 ausgebildeten Vertiefung entspricht im Wesentlichen der Erstreckung der Basis 101 in Richtung parallel zur Längsachse des Gewindestifts.

## Patentansprüche

1. System umfassend einen Gewindestift, wobei der Gewindestift umfasst:
- eine Basis (1; 101; 201),
- einen von der Basis (1; 101; 201) in der Richtung einer Längsachse (L) des Gewindestifts beabstandeten Spitzenabschnitt (2; 102; 202), wobei der Spitzenabschnitt (2; 102; 202) einen Brückenabschnitt (3; 103; 203) umfasst,
- eine erste Seitenwand (4; 104; 204) mit einem Außenprofil (5; 105; 205), die sich von dem Brückenabschnitt (3; 103; 203) zu einem ersten Basisteil (8; 108; 208) erstreckt, und eine zweite Seitenwand (6; 106; 206) mit einem Außenprofil (7; 107; 207), die sich von dem Brückenabschnitt (3; 103; 203) zu einem zweiten Basisteil (9; 109; 209) erstreckt, wobei die erste Seitenwand (4; 104; 204) aus einem anderen Teil des Ausgangsmaterials geformt ist als die zweite Seitenwand (6; 106; 206) und das erste Basisteil (8; 108; 208) aus einem anderen Teil des Ausgangsmaterials als das zweite Basisteil (9; 109; 209) geformt ist,
**wobei**
ein Teil des ersten Basisteils (8; 108; 208) in Eingriff mit einem Teil des zweiten Basisteils (9; 109; 209) ist und/oder, dass ein Teil des ersten Basisteils (8; 108; 208) mit einem Teil des zweiten Basisteils (9; 109; 209) verbunden ist,
und/oder
ein Teil der ersten Seitenwand (4; 104; 204) in Eingriff mit einem Teil der zweiten Seitenwand (6; 106; 206) ist und/oder ein Teil der ersten Seitenwand (4; 104; 204) mit einem Teil der zweiten Seitenwand (6; 106; 206) verbunden ist,
**gekennzeichnet durch** eine Aufnahme (301; 401), in der der Gewindestift quer zu seiner Längsachse (L) verschieblich gehalten werden kann.

2. Systrem nach Anspruch 1, **dadurch gekennzeichnet, dass** das Ausgangsmaterial ein Metallblech ist.

3. System nach Anspruch 1 oder 2, **dadurch gekennzeichnet, dass** der Teil der ersten Seitenwand (4; 104; 204), der in Eingriff mit einem Teil der zweiten Seitenwand (6; 106; 206) ist, und/oder der Teil der ersten Seitenwand (4; 104; 204), der mit einem Teil der zweiten Seitenwand (6; 106; 206) verbunden ist, näher an dem Spitzenabschnitt (2; 102; 202) als an der Basis (1; 101; 201) angeordnet ist.

4. System nach einem der Ansprüche 1 bis 3, **dadurch gekennzeichnet, dass** die erste Seitenwand (4; 104; 204) einen Vorsprung (10; 110; 210) aufweist, der sich in einer Richtung in einem Winkel zur Längsachse (L) des Gewindestifts erstreckt und mit einem Teil der zweiten Seitenwand (6; 106; 206) durch Reibschluss oder Formschluss in Eingriff ist.

5. System nach einem der Ansprüche 1 bis 4, **dadurch gekennzeichnet, dass** das erste Basisteil (8; 108; 208) einen Vorsprung aufweist, der sich in einer Richtung in einem Winkel zur Längsachse des Gewindestifts erstreckt und in reibschlüssigem oder formschlüssigem Eingriff mit einem Teil der Seitenwand des Basisteils ist.

6. System nach einem der Ansprüche 1 bis 5, **dadurch gekennzeichnet, dass**
- das erste Basisteil (8; 108; 208) und die erste Seitenwand aus Abschnitten des Ausgangsmaterials geformt sind und das erste Basisteil (8; 108; 208) mit der ersten Seitenwand (4; 104; 204) durch einen gebogenen Abschnitt des Ausgangsmaterials verbunden ist, und/oder
- das zweite Basisteil (9; 109; 209) und die zweite Seitenwand (6; 106; 206) aus Abschnitten des Ausgangsmaterials geformt sind und das zweite Basisteil (9; 109; 209) mit der zweiten Seitenwand (6; 106; 206) durch einen gebogenen Abschnitt des Ausgangsmaterials verbunden ist, und/oder
- der Brückenabschnitt (3) und die erste Seitenwand (4; 104; 204) aus Abschnitten des Ausgangsmaterials geformt sind und/oder
- der Brückenabschnitt (3) und die zweite Seitenwand (6; 106; 206) aus Abschnitten des Ausgangsmaterials geformt sind.

7. System nach einem der Ansprüche 1 bis 6, **dadurch gekennzeichnet, dass** der Brückenabschnitt (3) und die erste Seitenwand (4; 104; 204) und die zweite Seitenwand (6; 106; 206) aus Abschnitten des Ausgangsmaterials geformt sind und der Brückenabschnitt (3) die erste Seitenwand (4; 104; 204) mit der zweiten Seitenwand (6; 106; 206) verbindet.

8. System nach einem der Ansprüche 1 bis 7, **dadurch gekennzeichnet, dass** die erste Seitenwand (4; 104; 204) zumindest über einen Teil ihrer Erstreckung entlang der Längsachse einen U-förmigen, C-förmigen oder L-förmigen Querschnitt oder einen Querschnitt der Form eines Teils eines Rings in einer Ebene, die senkrecht zur Längsachse ist, aufweist und/oder, dass die zweite Seitenwand (6; 106; 206) zumindest über einen Teil ihrer Erstreckung entlang der Längsachse einen U-förmigen, C-förmigen oder L-förmigen Querschnitt oder einen Querschnitt der Form eines Teils eines Rings in einer Ebene, die senkrecht zur Längsachse ist, aufweist.

9. System nach einem der Ansprüche 1 bis 8, **dadurch gekennzeichnet, dass** der erste Basisteil (8; 108; 208) eine im Wesentlichen flache Oberfläche, die von dem Spitzenabschnitt (2; 102; 202) abgewandt ist, aufweist und/oder, dass das zweite Basisteil (9; 109; 209) eine im Wesentlichen flache Oberfläche, die von dem Spitzenabschnitt (2; 102; 202) abgewandt ist, aufweist.

10. System nach einem der Ansprüche 1 bis 9, **dadurch gekennzeichnet, dass** die Basis (1; 101; 201) verschieblich in einer Aufnahme (301; 401) gelagert werden kann.

11. System nach Anspruch 1 bis 10, wobei der Gewindestift in der Aufnahme (301; 401) in jeder Richtung quer zu seiner Längsachse (L) verschieblich gehalten werden kann.

12. System nach Anspruch 1 bis 11, wobei die Aufnahme einen die Basis (1; 101; 201) übergreifenden Arm (307) aufweist.

13. System nach einem der Ansprüche 1 bis 12, wobei die Aufnahme (301) eine Vertiefung (303) aufweist, die an die Dicke der Basis (1; 101; 201) des Gewindestifts angepasst ist und eine Grundfläche aufweist, die größer als die Grundfläche der Basis (1; 101; 201) ist.

14. System nach einem der Ansprüche 1 bis 13, wobei die Vertiefung (303) eine seitliche Anlagefläche (304) für eine Seitenfläche (305) der Basis (1; 101; 201) aufweist.

## Claims

1. System comprising a threaded pin, wherein the threaded pin comprises:
- a base (1; 101; 201),
- a tip section (2; 102; 202) spaced apart from the base (1; 101; 201) in the direction of a longitudinal axis (L) of the threaded pin, wherein the tip section (2; 102; 202) comprises a bridge section (3; 103; 203),
- a first side wall (4; 104; 204) with an outer profile (5; 105; 205), which extends from the bridge section (3; 103; 203) to a first base part (8; 108; 208), and a second side wall (6; 106; 206) with an outer profile (7; 107; 207) that extends from the bridge section (3; 103; 203) to a second base part (9; 109; 209), wherein the first side wall (4; 104; 204) is formed from another part of the starting material than the second side wall (6; 106; 206) and the first base part (8; 108; 208) is formed from another part of the starting material than the second base part (9; 109; 209);
wherein a part of the first base part (8; 108; 208) engages a part of the second base part (9; 109; 209) and/or that a part of the first base part (8; 108; 208) is connected with a part of the second base part (9; 109; 209);
and/or a part of the first side wall (4; 104; 204) engages a part of the second side wall (6; 106; 206) and/or a part of the first side wall (4; 104; 204) is connected with a part of the second side wall (6; 106; 206),
**characterised by** a take-up (301; 401), in which the threaded pin can be held transverse and moveable to its longitudinal axis (L).

2. System according to claim 1, **characterised in that** the starting material is metal sheet.

3. System according to claim 1 or 2, **characterised in that** the part of the first side wall (4; 104; 204) that engages a part of the second side wall (6; 106; 206) and/or the part of the first side wall (4; 104; 204) that is connected with a part of the second side wall (6; 106; 206) is arranged nearer to the tip section (2; 102; 202) than to the base (1; 101; 201).

4. System according to one of the claims 1 to 3, **characterised in that** the first side wall (4; 104; 204) has a protrusion (10; 110; 210) that extends in a direction at an angle to the longitudinal axis (L) of the threaded pin and engages a part of the second side wall (6; 106; 206) by means of friction closure or form closure.

5. System according to one of the claims 1 to 4, **characterised in that** the first base part (8; 108; 208) has a protrusion that extends in a direction at an angle to the longitudinal axis of the threaded pin and engages a part of the side wall of the base part by means of friction closure or form closure.

6. System according to one of the claims 1 to 5, **characterised in that**
- the first base part (8; 108; 208) and the first side wall are formed from sections of the starting material and the first base part (8; 108; 208) is connected with the first side wall (4; 104; 204) via a bent section of the starting material, and/or
- the second base part (9; 109; 209) and the second side wall (6; 106; 206) are formed from sections of the starting material and the second base part (9; 109; 209) is connected with the second side wall (6; 106; 206) via a bent section of the starting material and/or
- the bridge section (3) and the first side wall (4; 104; 204) are formed from sections of the starting material and/or
- the bridge section (3) and the second side wall (6; 106; 206) are formed from sections of the starting material.

7. System according to one of the claims 1 to 6, **characterised in that** the bridge section (3) and the first side wall (4; 104; 204) and the second side wall (6; 106; 206) are formed from sections of the starting material and the bridge section (3) connects the first side wall (4; 104; 204) with the second side wall (6; 106; 206).

8. System according to one of the claims 1 to 7, **characterised in that** the first side wall (4; 104; 204) has a U-shaped, C-shaped or L-shaped cross-section or a cross-section in the shape of a part of a ring on a level that is vertical to the longitudinal axis at least across part of its expansion along the longitudinal axis and/or that the second side wall (6; 106; 206) has a U-shaped, C-shaped or L-shaped cross-section or a cross-section in the shape of a part of a ring on a level that is vertical to the longitudinal axis at least across part of its expansion along the longitudinal axis.

9. System according to one of the claims 1 to 8, **characterised in that** the first base part (8; 108; 208) has a substantially flat surface that faces away from the tip section (2; 102; 202) and/or that the second base part (9; 109; 209) has a substantially flat surface that faces away from the tip section (2; 102; 202).

10. System according to one of the claims 1 to 9, **characterised in that** the base (1; 101; 201) can be displaceably mounted in a take-up (301; 401).

11. System according to claim 1 to 10, wherein the threaded pin can be displaceably held in the take-up (301; 401) in any direction transverse to its longitudinal axis (L).

12. System according to claim 1 to 11, wherein the take-up has an arm (307) straddling the base (1; 101; 201).

13. System according to one of the claims 1 to 12, wherein the take-up (301) has a recess (303) adapted to the thickness of the base (1; 101; 201) of the threaded pin and has a base area that is larger than the base area of the base (1; 101; 201).

14. System according to one of the claims 1 to 13, wherein the recess (303) has a side abutment surface (304) for a side surface (305) of the base (1; 101; 201).

## Revendications

1. Système comprenant une tige filetée, cette dernière comprenant :
- une base (1; 101; 201),
- une partie de pointe (2; 102, 202) éloignée de la base (1; 101; 201) en direction d'un axe longitudinal (L) de la tige filetée, laquelle partie de pointe (2; 102; 202) comprend une partie en pont (3; 103; 203),
- une première paroi latérale (4; 104; 204) présentant un profil extérieur (5; 105; 205) qui s'étend de la partie en pont (3; 103; 203) jusqu'à une première partie (8; 108; 208) de la base, et une seconde paroi latérale (6; 106; 206) présentant un profil extérieur (7; 107; 207) qui s'étend de la partie en pont (3; 103; 203) jusqu'à une seconde partie (9; 109; 209) de la base,
dans lequel la première paroi latérale (4; 104; 204) est formée à partir d'une autre partie du matériau de départ que la seconde paroi latérale (6; 106; 206), et la première partie (8; 108; 208) de la base est formée à partir d'une autre partie du matériau de départ que la seconde partie (9; 109; 209) de la base,
dansl lequel une partie de la première partie (8; 108; 208) de la base est en prise avec une partie de la seconde partie (9; 109; 209) de la base et/ou une partie de la première partie (8; 108; 208) de la base est reliée à une partie de la seconde partie (9; 109; 209) de la base, et/ou une partie de la première paroi latérale (4; 104; 204) est en prise avec une partie de la seconde paroi latérale (6; 106; 206) et/ou une partie de la première paroi latérale (4; 104; 204) est reliée à une partie de la seconde paroi latérale (6; 106; 206), **caractérisé par** un logement (301; 401) où la tige filetée peut être tenue de manière déplaçable transversalement par rapport à son axe longitudinal (L).

2. Système selon la revendication 1, **caractérisé en ce que** le matériau de départ est une tôle métallique.

3. Système selon la revendication 1 ou 2, **caractérisé en ce que** la partie de la première paroi latérale (4; 104; 204), qui est en prise avec une partie de la seconde paroi latérale (6; 106; 206), et/ou la partie de la première paroi latérale (4; 104; 204), qui est relié avec une partie de la seconde paroi latérale (6; 106; 206), est plus proche de la partie de pointe (2; 102; 202) que de la base (1; 101; 201).

4. Système selon l'une des revendications 1 à 3, **caractérisé en ce que** la première paroi latérale (4; 104; 204) présente une saillie (10; 110; 210) qui s'étend dans une direction à un angle par rapport à l'axe longitudinal (L) de la tige filetée et est en prise avec une partie de la seconde paroi latérale (6; 106; 206) par frottement ou par emboîtement.

5. Système selon l'une des revendications 1 à 4, **caractérisé en ce que** la première partie (8; 108; 208) de base présente une saille qui s'étend dans une direction à un angle par rapport à l'axe longitudinal de la tige filetée et est en prise par frottement ou par emboîtement avec une partie de la paroi latérale de la partie de base.

6. Système selon l'une des revendications 1 à 5, **caractérisé en ce**
- **que** la première partie (8; 108; 208) de base et la première paroi latérale sont formées de parties du matériau de départ et que la première partie (8; 108; 208) de base est reliée à la première paroi latérale (4; 104; 204) par une partie courbée du matériau de départ, et/ou
- la deuxième partie (9; 109; 209) de base et la seconde paroi latérale (6; 106; 206) sont formées des parties de matériau de départ et la seconde partie (9; 109; 209) de base et reliée à la seconde paroi latérale (6; 106; 206) par une partie courbée du matériau de départ, et/ou
- la partie en pont (3) et la première paroi latérale (4; 104; 204) sont formées de parties de matériau de départ et/ou
- la partie en pont (3) et la deuxième paroi latérale (6; 106; 206) sont formées de parties de matériau de départ.

7. Système selon l'une des revendications 1 à 6, **caractérisé en ce que** la partie en pont (3) et la première paroi latérale (4; 104; 204) et la seconde paroi latérale (6; 106; 206) sont formées de parties de matériau de départ et que la partie en pont (3) relie la première paroi latérale (4; 104; 204) avec la seconde paroi latérale (6; 106; 206).

8. Système selon l'une des revendication 1 à 7, **caractérisé en ce que** la première paroi latérale (4; 104; 204) présente, au moins sur une partie de son étendue le long de l'axe longitudinal, une section en forme de U, en forme de C ou en forme de L ou une section de la forme d'une pièce d'un anneau dans un plan perpendiculaire à l'axe longitudinal et/ou que la seconde paroi latérale (6; 106; 206) présente, au moins sur une partie de son étendue le long de l'axe longitudinal, une section en forme de U, en forme de C ou en forme de L ou une section de la forme d'une pièce d'un anneau dans un plan perpendiculaire à l'axe longitudinal.

9. Système selon l'une des revendications 1 à 8, **caractérisé en ce que** la première partie (8; 108; 208) de base présente une surface essentiellement plate détournée de la partie de pointe (2; 102; 202) et/ou que la seconde partie (9; 109; 209) de base présente une surface essentiellement plate détournée de la partie de pointe (2; 102; 202).

10. Système selon l'une des revendications 1 à 9, **caractérisé en ce que** la base (1; 101; 201) peut être logée dans un logement (301; 401) de manière déplaçable.

11. Système selon l'une des revendications 1 à 10, dans lequel la tige filetée dans le logement (301; 401) peut être tenue de manière déplaçable transversalement par rapport à son axe longitudinal (L) dans toutes les directions.

12. Système selon l'une des revendications 1 à 11, dans lequel le logement présente un bras (307) surplombant la base (1; 101; 201).

13. Système selon l'une des revendications 1 à 12, dans lequel le logement (301) présente une cavité (303), ajustée à l'épaisseur de la base (1; 101; 201) de la tige filetée, et une superficie supérieure à la superficie de la base (1; 101; 201).

14. Système selon l'une des revendications 1 à 13, dans lequel la cavité (303) présente une surface latérale d'appui (304) pour une surface latérale (305) de la base (1; 101; 201).
